(19) Europäisches Patentamt
European Patent Office
Office européen des brevets

(11) **EP 2 618 478 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(51) Int Cl.:
*H02P 3/18* *(2006.01)*    *H02M 5/458* *(2006.01)*

(21) Anmeldenummer: **12008297.9**

(22) Anmeldetag: **12.12.2012**

(54) **Verfahren zum Optimieren des Betriebs eines Elektromotors**

Method for optimising the operation of an electric motor

Procédé d'optimisation du fonctionnement d'un moteur électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2011 DE 102011121154**

(43) Veröffentlichungstag der Anmeldung:
**24.07.2013 Patentblatt 2013/30**

(73) Patentinhaber: **Michael Koch GmbH
76698 Ubstadt-Weiher (DE)**

(72) Erfinder:
• **Trümpler, Walter
76227 Karlsruhe (DE)**
• **Koch, Michael
76698 Ubstadt-Weiher (DE)**

(74) Vertreter: **Lichti - Patentanwälte Partnerschaft mbB
Postfach 41 07 60
76207 Karlsruhe (DE)**

(56) Entgegenhaltungen:
**US-A1- 2010 019 718**

• **Petra De Boer: "D-Incert 7 januari 2011 Second life toepassingen van EV batterijen", , 7. Januar 2011 (2011-01-07), XP055114927, Gefunden im Internet:
URL:http://www.d-incert.nl/wp-content/uploads/2011/01/4.-Presentatie-Second-life-KEMA-D-Incert-7-januari-2011.pdf [gefunden am 2014-04-23]**

EP 2 618 478 B1

## Beschreibung

Die Erfindung betrifft ein Verfahren zum Optimieren des Betriebs eines Kondensators als Energiespeicher, insbesondere zum Optimieren des Zwischenspeicherns elektrischer Energie eines an einem Wechselrichter betriebenen Elektromotors in der Bremsphase in einem Energiespeicher.

Die Erfindung geht aus von einem Stand der Technik, wie er durch die EP 2 372 892 A1 vorbekannt war, die insbesondere eine Energiespeichereinrichtung zum Anschluss an einen Zwischenkreis eines Wechselrichters und zur Zwischenspeicherung elektrischer Bremsenergie eines an dem Wechselrichter betriebenen Motors sowie ein Verfahren zum Zwischenspeichern elektrischer Bremsenergie eines an einem Wechselrichter mit Zwischenkreis betriebenen Motors beschreibt und deren Offenbarungsgehalt auch vollumfänglich zum Offenbarungsgehalt der vorliegenden Anmeldung gemacht wird. Während dort im konkreten Ausführungsbeispiel im Zwischenkreis des Umrichters ein Zwischenkreiskondensator vorgesehen ist, ist ein solcher nicht unabdingbar, insbesondere nicht für das erfindungsgemäße Verfahren, da eine Zwischenkreisspannung des Zwischenkreises zur Überwachung, Steuerung und Regelung auch selbstverständlich ohne einen solchen abgenommen und erfasst werden kann.

Ein solcher Energiespeicher, wie er in der genannten Druckschrift beschrieben ist, dient zur Aufnahme und Zwischenspeicherung von Bremsenergie eines Elektromotors, um diese nicht beispielsweise über einen Bremswiderstand vollständig (durch Umwandlung in Wärme) zu verlieren, sondern zumindest zum Teil in der motorischen Arbeitsphase des Elektromotors diesen wieder zur Verfügung zu stellen, um so den gesamten Energieeinsatz - gegenüber dem vollständigen Verlust der Bremsenergie durch Umwandlung in Wärme in einem Widerstand - zu reduzieren.

Die Energieaufnahme eines Energiespeichers steigt quadratisch mit der Spannung desselben. Das maximale Speichervermögen wird bei voller Aufladung des Speichers und der Spannung Null bis zur regulären höchst zulässigen Spannung oder maximalen Speicherspannung erreicht, die so ausgelegt ist, dass sie ohne Zerstörung des Speichers kurzzeitig überschritten werden darf, wobei allerdings eine absolute Speichermaximalspannung, bei der die Gefahr einer Beschädigung oder Zerstörung gegeben ist, auf keinen Fall erreicht werden darf.

Allerdings kann ein solches maximales Speichervermögen nicht voll ausgenutzt werden, da eine gewisse Anfangsspannung und damit eine Anfangsladung erforderlich ist. Die Anfangsspannung bestimmt nämlich in Verbindung mit dem Maximalwert des Stromes die maximal mögliche Anfangsleistung des Bremsvorganges, wobei der Strom durch die verwendeten elektrischen und elektronischen Bauteile konstruktiv begrenzt ist. Aus diesem Grunde sieht die EP 2 372 892 A1 schon vor, dass der Energiespeicher auf 25 bis 50 % seiner regulären Maximalspannung vorgeladen und nicht unter einem solchen fest vorgegebenen Wert entladen wird. Dieser kann nach der Druckschrift für jedes Wechselrichter-Motor-System durch dieses fest vorgegeben sein.

Es kann keine Optimierung des Betriebs des Energiespeichers und damit des angeschlossenen Motors in energetischer Hinsicht erreicht werden, da eine solche vom Arbeitsverhalten und insbesondere dem Bremsverhalten, das sich auch bei einem Wechselrichter-Motor-System im Betrieb verändern kann, beeinflusst wird.

Darüber hinaus ist auch die Aufnahme von Bremsenergie eines Antriebs bei gegebener Leistung durch einen Energiespeicher im unteren Spannungsbereich mit höheren Verlusten verbunden als in einem höheren Spannungsbereich. Dies ist bedingt durch den höheren Ladestrom bei kleiner Spannung und insbesondere auch bei Kondensatoren, die als Zwischenenergiespeicher zumindest in der Regel eingesetzt werden, durch deren spezifisches Verhalten. Auch unter diesem Gesichtspunkt des Wirkungsgrades ist es vorteilhaft die Energiespeicherung und die Rückspeisung und damit auch den Einsatz der Energieaufnahme beim Speichern auf einem möglichst hohen Spannungsniveau stattfinden zu lassen. Dies gilt insbesondere bei einer schnellen Folge von Bremszyklen. Insofern stehen auch Speichervermögen und Wirkungsgrad konträr zueinander, womit Aufnahmeleistung und Wirkungsgrad gleichsinnig verlaufen, allerdings nicht parallel; während die maximale linear mit der Anfangsspannung ansteigt, zeigt der Wirkungsgrad ein nicht lineares, degressives Verhalten.

Die US 2010/0019718 A1 betrifft ein Verfahren und eine Vorrichtung ausschließlich zur Steuerung der Leistungsübertragungsrate beim Be- und Entladen an einem Fahrzeug angebrachten elektrischen Akkumulatoren (Akku), auch wenn dort allgemein von einer Energiespeichereinheit gesprochen wird. Diese Leistungsübertragungsrate bezeichnet die zeitliche Zu- oder Abfuhr von Leistungen oder von dem Akku. Dieser Vorgang (rate of charge) soll in Abhängigkeit einer geschätzten zeitlichen Dauer des Prozesses so gewählt werden, dass ein für die Batterie schonender Vorgang beim Be- und Entladen entsteht. Es soll sowohl ein zu langsamer Vorgang als auch ein zu schneller Vorgang vermieden werden. Ist der Vorgang zu langsam, wird die Kapazität des vorhandenen Energiespeichers nicht ausgenutzt. Gleichsam ist bei einem zu schnellen Vorgang die Batterie beim Entladevorgang zu stark entladen und beim Aufladevorgang überlastet.

Die Druckschrift Petra de Boer, "D-Incert 7 januari 2011 Second life toepassingen van EV batterijen" betrifft die Anwendung von "Second Life"-Batterien. Dies sind Batterien - genauer wohl elektrische Akkumulatoren (Akkus), welche nur noch 80 % ihres Energiespeichervermögens haben. Sie werden dann nicht mehr als reguläre Batterien, sondern als "Second Life"-Batterien, also als Zwischenspeicher benutzt. Seite 11 offenbart, dass solche Batterien, die nur stets zu 20 % entladen wurden (DoD, depth of discharge), öfter be- und entladen werden können, bis ihre Kapazität auf 80 % ihrer Gesamtkapazität abgefallen ist.

Der Erfindung liegt daher die Aufgabe zugrunde, unter Beachtung der konstruktiven Randbedingungen, insbesondere des eingesetzten Energiespeichers, eine selbsttätige optimale Anpassung des Speicherbereichs, in dem die Speicherung erfolgt, vorzusehen.

Erfindungsgemäß wird die genannte Aufgabe mit einem Verfahren der eingangs genannten Art mit den kennzeichnenden Merkmalen des Anspruchs 1 gelöst.

Soweit nicht anders gesagt, beziehen sich alle Angaben zu Spannungen auf am Energiespeicher gegebene und gemessene Spannungen. Der Energiespeicher kann bevorzugt ein Kondensator sein.

Die Minimalspannung, auf die der Energiespeicher im Motor- bzw. Rückspeisebetrieb entladen werden darf, wird zunächst vorgegeben bzw. eingestellt, insbesondere um den Betrieb des Energiespeichers während der Bremsphase zu optimieren.

Liegt die während einer Bremsphase gemessene Spitzenspannung $U_{cs}$ am Energiespeicher unterhalb einer vorgegebenen regulären Maximalspannung $U_{cmax}$ des Energiespeichers, so

wird in der beschriebenen Weise die Minimal-Energiespeicher-Spannung $U_{cmin}$ des Energiespeichers oder seine Anfangsladespannung angehoben; die Minimalspannung ist die - dynamisch veränderliche - Spannung, die bei einer nach einer generatorischen oder Bremsphase des Motors folgenden motorischen oder Rückspeisephase nicht unterschritten wird und die also unter den genannten Bedingungen in der beschriebenen Weise gegenüber ihrem Ausgangswert erhöht wurde. Dies bedingt, dass beim nächsten Bremsvorgang sowohl eine höhere Anfangsleistung durch den Zwischenenergiespeicher aufgenommen werden kann als auch der Wirkungsgrad der Speicherung verbessert wird. Dies kann so lange fortgesetzt werden, solange der während einer Bremsphase gemessene Spitzenspannungswert unterhalb des regulären zulässigen Maximalspannungswerts $U_{cmax}$ des Energiespeichers liegt. Die reguläre zulässige Maximalspannung $U_{cmax}$ ist eine in Relation zur Nennspannung des Energiespeichers in geeigneter oder gewünschter Weise festgesetzter Spannungswert. Die Nennspannung ist ein beispielsweise für einen bestimmten Kondensator als Energiespeicher vorgegebener Wert, der allerdings kurzzeitig - auch erheblich - überschritten werden kann - bis unterhalb einer absoluten Maximalspannung $U_{cma\text{-}xabs}$, bei deren Erreichen eine Zerstörung des Kondensators droht. Die zulässige Maximalspannung $U_{cmax}$ wird im Rahmen der Erfindung vorzugsweise auf den Wert der Nennspannung gesetzt, kann aber auf einen Wert unterhalb derselben gesetzt werden, beispielsweise 10 Volt unterhalb, sollte aber vorzugsweise nicht die Nennspannung überschreiten.

Wird während der Abfolge mehrerer Bremsungen aufgrund unterschiedlicher Bremsmuster die regulär zulässige Maximalspannung $U_{cmax}$ überschritten, die, wie gesagt, derart bestimmt bzw. ausgelegt ist, dass sie kurzzeitig ohne Beschädigung oder Zerstörung überschritten werden darf, so wird die Minimalspannung des Energiespeichers $U_{cmin}$ vermindert, wenn die Spitzenspannung am Energiespeicher $U_{cs}$ während einer Bremsphase größer als die reguläre maximale Kondensatorspannung $U_{cmax}$ ist.

Sowohl bei der dynamischen Erhöhung der Absolut-Energiespeicher-Spannung oder Anfangsladespannung bei einem Bremsvorgang als auch der Reduzierung dient das Maß des Unterschreitens bzw. Überschreitens der regulär zulässigen Maximalspannung des Energiespeichers als Maß zur Bestimmung des positiven bzw. negativen Korrekturwerts für die untere Ladespannungsgrenze.

Die Erhöhung der unteren Ladespannungsgrenze oder der dynamisch veränderlichen minimalen Energiespeicher-Spannung geschieht in kleinen Schritten und zwar gemäß einer bevorzugten Ausgestaltung des erfindungsgemäßen Verfahrens derart, dass die Minimalspannung am Energiespeicher $U_{cmin}$ um einen Faktor a = 0,05 bis 0,2 der Differenz der regulären maximalen Kondensatorspannung und der während der Bremsphase gemessenen Spitzenspannung am Kondensator erhöht wird:

$$U_{cmin} = U_{cmin} + (U_{cmax} - U_{cs}) \cdot a,$$

wobei

$$0,01 \leq a \leq 0,2$$

insbesondere um einen Faktor a = 1/32 der genannten Differenz erhöht wird:

$$U_{cmin} = U_{cmin} + (U_{cmax} - U_{cs})/32,$$

wenn die Spitzenspannung am Energiespeicher $U_{cs}$ gleich oder kleiner als die reguläre zulässige Maximalspannung des Energiespeichers $U_{cmax}$ ist. Dieses Vorgehen wird auch einer Folge von unregelmäßigen stärkeren Bremsungen gerecht, ohne dass zu oft eine Absenkung der unteren Ladespannungsgrenze gemäß dem vorstehenden Absatz notwendig ist.

Demgegenüber erfolgt die gegebenenfalls notwendige Absenkung der minimalen Energiespeicher-Spannung oder der unteren Ladegrenze vorzugsweise mit höherer Gewichtung, also in größeren Schritten und insbesondere dadurch, dass die Minimalspannung des Energiespeichers $U_{cmin}$ um einen Faktor b = 1 bis 3 der Differenz zwischen während der Bremsphase gemessener Spitzenspannung am Energiespeicher $U_{cs}$ und regulärer maximaler Spannung des Energiespeichers $U_{cmax}$ vermindert wird:

$$U_{cmin} = U_{cmin} - (U_{cs} - U_{cmax}) \cdot b,$$

wobei

$$1 \leq b \leq 3,$$

insbesondere um einen Faktor b = 2 der genannten Differenz vermindert wird:

$$U_{cmin} = U_{cmin} - (U_{cs} - U_{cmax}) \cdot 2,$$

wenn die Spitzenspannung am Energiespeicher $U_{cs}$ während einer Bremsphase größer als die reguläre Maximalspannung $U_{cmax}$ des Energiespeichers ist.

Hierdurch wird erreicht, dass bei Überschreiten der regulär zulässigen Maximalspannung die Anfangsspannung schnell wieder auf einen Wert zurückgeführt wird, der erwarten lässt, dass die reguläre zulässige Maximalspannung bei folgenden Bremsphasen nicht mehr überschritten wird.

In bevorzugter Ausgestaltung kann dabei weiterhin vorgesehen sein, dass das Verhältnis der Veränderungsfaktoren a zu b bei Erhöhung bzw. Verminderung der dynamisch veränderlichen Minimalspannung $U_{cmin}$ am Energiespeicher zwischen 1:10 und 1:160, vorzugsweise bei 1:64 liegt, also $1:10 \geq a:b \geq 1:100$, vorzugsweise a:b = 1:64.

Gemäß einer bevorzugten Ausbildung der Erfindung ist vorgesehen, dass während einer Bremsphase ein gesetzter und gespeicherter Spitzenspannungswert $U_{cs}$ auf den höchsten während der Bremsphase gemessenen Wert der Spannung $U_c$ am Energiespeicher gesetzt wird.

Weitere bevorzugte Ausgestaltungen des erfindungsgemäßen Verfahrens beinhalten, dass ein Bremsvorgang erst angenommen wird und damit die vorstehende Anpassung des Spannungsbereichs, in dem das Laden des Energiespeichers während des Bremsvorgangs erfolgt, erst angenommen wird, wenn die - während einer Bremsphase - am Energiespeicher gemessene Spannung die gesetzte Minimalspannung oder Anfangsladespannung des Energiespeichers um einen erheblichen Wert überschreitet, und dass ein Ende des Bremsvorgangs angenommen wird, wenn die aktuell gemessene Spannung zwar auch oberhalb der gesetzten Minimal- oder Anfangsladespannung, aber unterhalb eines niedrigeren Werts als vorstehend angegeben liegt.

Gemäß einer bevorzugten Ausgestaltung kann dies dadurch erfolgen, dass Eintritt und/oder Ende einer Bremsphase des Motors am Wechselrichter bestimmt und festgehalten werden, insbesondere der Eintritt der Bremsphase bzw. das Ende der Bremsphase jeweils durch Setzen eines Merkers.

Die Bremsphase wird insbesondere derart bestimmt, dass der Eintritt der Bremsphase bei Überschreiten der geltenden dynamisch veränderlichen Minimalspannung am Energiespeicher $U_{cmin}$ um einen Wert $U_a$ zwischen 30 und 90 Volt, vorzugsweise 40 bis 70 Volt, und/oder das Ende der Bremsphase bei Unterschreiten der gesetzten dynamisch veränderlichen minimalen Spannung am Energiespeicher $U_{cmin}$ zuzüglich eines Werts $U_b$ von höchstens 10 bis 30 Volt, vorzugsweise 20 Volt durch die aktuell anliegende Spannung $U_c$ detektiert wird, wobei insbesondere der Grenzwert $U_a$ des Überschreitens der gesetzten dynamisch veränderlichen Minimalspannung $U_{cmin}$ des Energiespeichers zum Bestimmen des Eintritts der Bremsphase größer, insbesondere wesentlich größer, als der Grenzwert $U_b$ über der gesetzten dynamisch veränderlichen Minimalspannung am Energiespeicher $U_{cmin}$ gemäß $U_a \gg U_b$, insbesondere $U_a > U_b + 30$ Volt ist. Gemäß einer weiteren bevorzugten Ausgestaltung ist vorgesehen, dass das Unterschreiten einer vorgegebenen absoluten Minimalspannung oder Absolut-Minimalspannung des Energiespeichers $U_{cmin}EE$ durch die während der Bremsphase gesetzte dynamisch veränderliche Minimalspannung des Energiespeichers $U_{cmin}$ überwacht wird, woraufhin die dynamisch veränderliche Minimalspannung des Energiespeichers $U_{cmin}$ auf den absoluten Minimalwert $U_{cmin}EE$ gesetzt wird.

Darüber hinaus sehen bevorzugte Ausgestaltungen vor, dass am Ende einer Bremsphase der gesetzte Spannungsspitzenwert $U_{cs}$ für die nächste Bremsphase auf den Wert der dynamisch veränderlichen Minimalspannung $U_{cmin}$ des Energiespeichers $U_{cmin}$ gesetzt wird und insbesondere dass zum Ende einer Bremsphase der Wert einer dynamisch veränderlichen Maximalspannung $U_{cabs}$ auf einen oberhalb der regulären Maximalspannung $U_{cmax}$ liegenden Wert gesetzt wird, insbesondere auf einen um einen Erhöhungswert $U_e$ oberhalb von $U_{cmax}$ liegenden Wert.

Dabei kann vorgesehen sein, dass der Erhöhungswert ein Bruchteil der Differenz zwischen der gesetzten Minimalspannung des Energiespeichers $U_{cmin}$ und dessen Absolut-Minimalspannung $U_{cmin}EE$ ist vorzugsweise ein Bruchteil c zwischen 1 und 3 dieser Differenz:

$$U_{cabs} \; = \; U_{cmax} \; + \; U_e \; = \; U_{cmax} \; + \; (U_{cmin} \; - \; U_{cmin}EE) \; / \; c,$$

wobei

$$1 \; \leq \; c \; \leq \; 3,$$

insbesondere c die Hälfte dieser Differenz ist:

$$U_{cabs} \; = \; U_{cmax} \; + \; U_e \; = \; U_{cmax} \; + \; (U_{cmin} \; - \; U_{cmin}EE) \; / \; 2$$

Wie schon eingangs gesagt, wird beim Gerätestart mit einer vorgegebenen, gegebenenfalls systemspezifischen absoluten unteren Ladespannung oder Absolut-Minimalspannung $U_{cmin}EE$ des Energiespeichers gestartet. Wenn dann insbesondere in der Anfangsphase, bei der die jeweilige Anfangsladespannung noch nicht in der oben beschriebenen Weise dynamisch angepasst wurde, Bremsvorgänge mit Leistungsspitzen auftreten, die nicht durch den Energiespeicher aufgenommen werden können, weil dessen Anfangsspannung - noch - zu klein ist, so übernimmt in bevorzugter Ausgestaltung ein Ballastwiderstand den überschüssigen Anteil der Leistung, so dass kein unzulässiger Spannungsanstieg der Eingangsspannung oder Zwischenkreisspannung des Umrichters entsteht.

Gleiches geschieht, wenn im weiteren Verlauf aufgrund des dynamischen Ansteigens der Minimalspannung $U_{cmin}$ des Energiespeichers oder unteren Ladespannungsgrenze aufgrund starker Bremsungen die Energieaufnahme des Energiespeichers nicht mehr ausreichen kann, so dass auch dann der Ballastwiderstand die überschüssige Energie übernimmt. Dies ist für das System kein Nachteil, weil der Fall nur in größeren Zeitabständen auftritt und in der Zwischenzeit alle anderen Bremsungen mit optimiertem Wirkungsgrad und erhöhter Anfangsleistungsaufnahme stattfinden können.

Das Zu- und Abschalten des Energiespeichers zum bzw. vom Zwischen- oder Gleichstromkreis des Umrichters erfolgt bevorzugt durch einen DC-DC-Steller.

Die Erfindung bietet insgesamt eine optimale Anpassung der Betriebsbedingungen des Energiespeichers an die durch effektive Speicherkapazität, Anfangsleistung und Wirkungsgrad gegebenen Anforderungen. Dabei ist die vorzugsweise vorgesehene langsame Anpassung der Anfangsladespannung oder dynamisch veränderlichen Minimalspannung $U_{cmin}$ des Energiespeichers technisch unkritisch. Der Nutzen durch die bessere Effizienz im oberen Spannungsbereich bleibt nämlich bestehen, weil der zeitliche Anteil des Anpassungsvorganges im Verhältnis zur gesamten Betriebszeit der Last (Motor) vernachlässigbar ist. Mit der langsameren Anpassung der unteren Grenze zu höheren Werten hin wird aber, wie gesagt, Anwendungen mit unterschiedlich energiereichen Bremsvorgängen Rechnung getragen. Demgegenüber ist, wie ebenfalls schon ausgeführt, die Anpassung der unteren Spannungsgrenze oder Anfangsladespannung $U_{cmin}$ in zu niedrigeren Werten hin stärker gewichtet, um bei einem höheren Anteil stärkerer Bremsungen mit größerer Energieabgabe wieder genügend Speichervermögen zur Verfügung zu halten und damit weniger häufig die Unterstützung eines Ballastwiderstandes zu benötigen.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:

Fig. 1     die schematische Darstellung eines dynamischen Energiespeichers und seine Zuordnung zu einem Wechselrichter eines Elektromotors zur Durchführung des erfindungsgemäßen Verfahrens;

Fig. 2     eine konkrete Ausgestaltung eines Energiespeichers zur Durchführung des erfindungsgemäßen Verfahrens;

Fig. 3     ein Diagramm mit der Darstellung der Speicherkapazität $E_c$ und der Anfangsleistung $P_{max}$ eines Kondensators

in Abhängigkeit von der Ausgangskompensatorspannung bzw. der minimalen Kondensatorspannung eines Kondensators beim Beginn des Ladens;

Fig. 4    ein Diagramm wiederum der Speicherkapazität $E_c$ sowie des Wirkungsgrads eines Kondensators in Abhängigkeit von der Ausgangsspannung bzw. Minimalspannung am Anfang eines Ladevorgangs;

Fig. 5    Anfangsleistung und Wirkungsgrad in Abhängigkeit der Anfangsspannung bzw. Minimalspannung bei Beginn eines Bremsvorganges;

Fig. 6    eine Darstellung des Verlaufs der Spannung an einem Speicherkondensator während des Bremsvorgangs eines Elektromotors mit Angabe verschiedener charakteristischer Spannungen; und

Fig. 7    ein Ablaufdiagramm zum erfindungsgemäßen Verfahren.

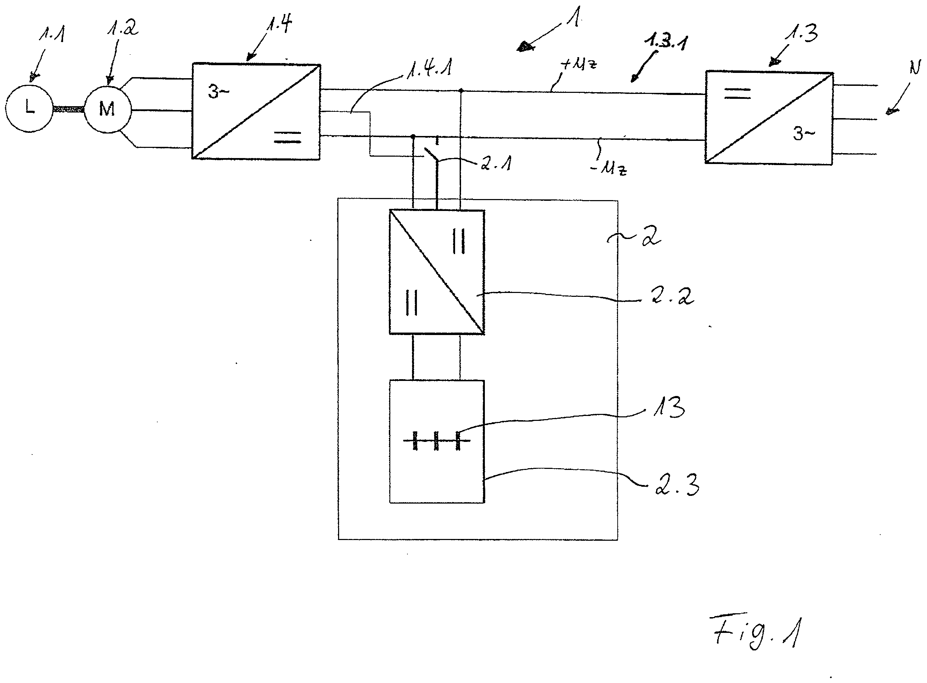

Wie in Fig. 1 dargestellt ist, wird ein eine Last 1.1 bewegender Elektromotor 1.2 aus einem Versorgungsnetzwerk über einen Umrichter 1 angetrieben, der einen mit einem netzseitigen Gleichrichter 1.3 und einen motorseitigen Wechselrichter 1.4 sowie zwischen diesen ein Zwischen- oder Gleichstromzweig aufweist. Dabei richtet der Gleichrichter 1.3 die Wechsel- oder Drehspannung des Netzes in eine Gleichspannung und der Wechselrichter 1.4 diese in eine für den Motor geeignete Wechselspannung um. Im Gleichstromzweig oder Zwischenkreis 1.3.1 zwischen Gleichrichter 1.3 und Wechselrichter 1.4 ist eine dynamischer Energiespeichereinheit 2 über zwei Leistungsleitungen angeschlossen, der darüber hinaus mit über einen Schalter 2.1 mit einem Brems-Chopper-Ausgang 1.4.1 des Wechselrichters 1.4 verbunden sein kann.

Die dynamische Energiespeichereinheit 2, die auch als dynamische Energieversorgung fungieren kann, weist einerseits einen DC-DC-Steller 2.2 und andererseits einen Energiespeicher 2.3 auf. Dieser kann in verschiedener Weise ausgestaltet sein, es kann sich beispielsweise um einen Akku oder auch einen mechanischen Speicher handeln. Bevorzugt ist der Speicher 2.3, wie im Folgenden beschrieben, ein Kondensatorspeicher mit ein oder mehreren Kondensatoren 13.

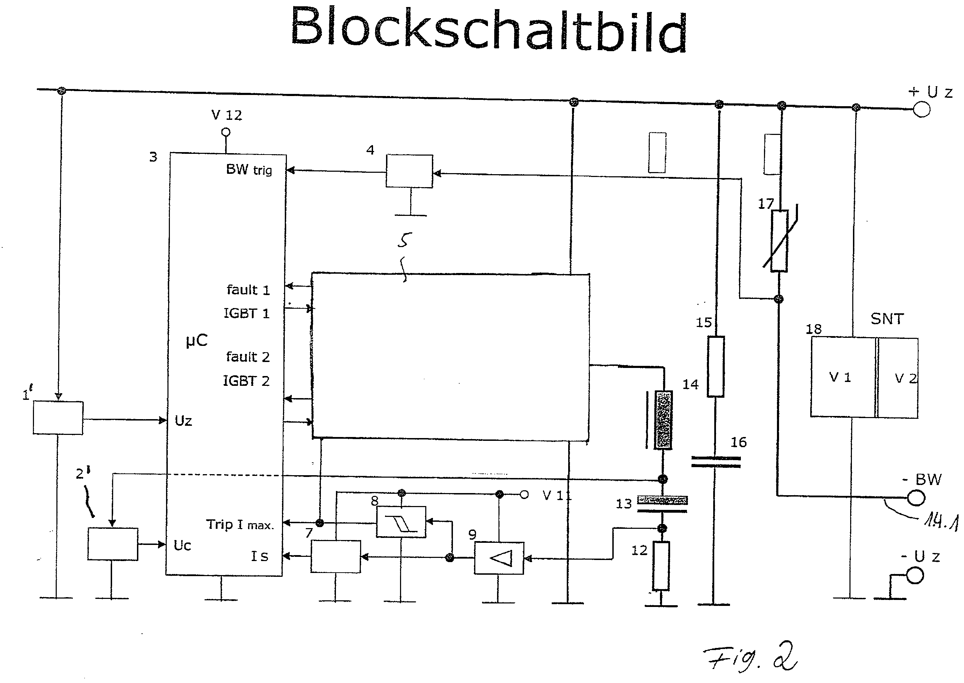

Die dynamische Energiespeichereinheit 2 ist genauer in der Fig. 2 dargestellt. Sie ist entsprechend der Fig. 1 im Zwischenspannungskreis zwischen der positiven Zwischenkreisspannung +Uz und der unteren Zwischenkreisspannung -Uz eingebunden, die letztere auf Masse gelegt ist. Der Speicherkondensator 13 ist mit letzterer über einen Strom-Shunt 12 und andererseits über eine Speicherdrossel mit einem Hoch-Tief-Setzsteller 5 als eine konkrete Ausgestaltung eines DC-DC-Stellers, wobei grundsätzlich auch andere Schaltungen maßgeblich sind, verbunden. Der Speicherkondensator ist weiter über dem Hoch-Tief-Setzsteller mit der oberen Zwischenkreisspannung +Uz verbunden, wobei der Hoch-Tief-Setzsteller entsprechend der EP 2 372 892 A1 ausgebildet ist, so dass zu seiner genauen Ausgestaltung und Funktionalität auf die Ausführungen in dieser Druckschrift, insbesondere ab Absatz [0037] verwiesen wird, die vollauf zum Gegenstand der vorliegenden Anmeldung gemacht werden.

Weiterhin weist die Schaltung in an sich bekannter Weise einen Mikrocontroller 3 sowie Spannungsteiler 1 und 2, zum einen zur Messung der Zwischenkreisspannung Uz des Umrichters, zum anderen zur Messung der Spannung des $U_c$ des Energiespeichers auf, wobei die Messungen in den Mikrocontroller 3 eingehen. Über einen weiteren Spannungsteiler 4 wird der Brems-Chopper-Ausgang 1.4.1 (Fig.1) des Wechselrichters 1.4 entsprechend seinem Einschaltzustand Wert -BW erfasst und als Trigger-Bremswert an den Mikrocontroller 3 übergeben. Zwischen Speicherkondensator 13 und Strom-Shunt 12 wird von einem Differenzverstärker 9 die Shunt-Spannung erfasst, die einerseits über einen Pegelanpasser zur Pegelanpassung für den Strom Istwert $I_s$ dient. Andererseits wird hierüber mittels einer Überstromerfassung 8 das Überschreiten eines absoluten Stromlimits erfasst und führt gegebenenfalls über den Eingang Trip I max des Mikrocontrollers 3 zur autarken Abschaltung.

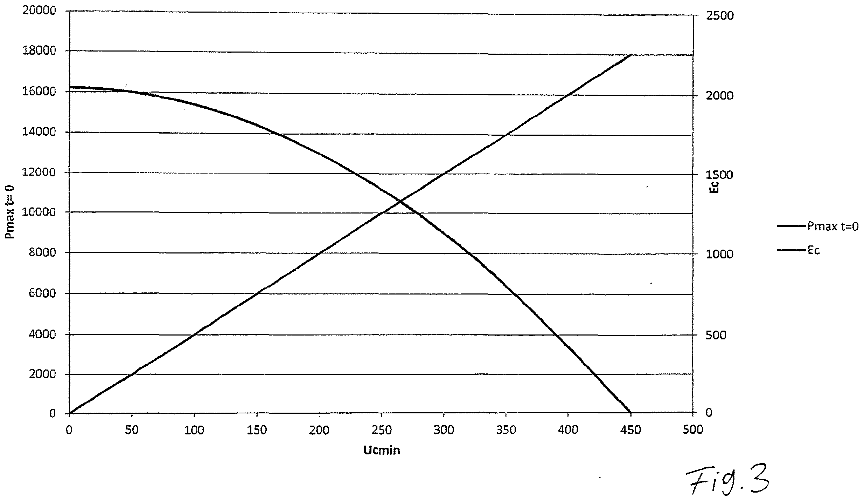

Mit 17 ist ein an sich bekannter Bremswiderstand bezeichnet, der als selbstbegrenzender Widerstand (PTC) ausgebildet sein kann. Wird der Motor gebremst und arbeitet demgemäß als Generator, steigt die Spannung im Zwischen- oder Gleichstromkreis 1.3.1 an, was eine Auslösung des Brems-Choppers bewirkt, wodurch der Brems-Chopper-Ausgang 1.4.1 auf die Spannung der Leitung -Zu des Zwischenkreises 1.3.1 gesetzt wird. Über ein Schaltnetzteil 18 wird die Spannungsversorgung V1 und V2 zur Spannungsversorgung des dynamischen Energiespeichers, wie beispielsweise der beiden Gate-Treiber des Hoch-Tief-Setzstellers, der Pegelanpassung 7, der Überstromerfassung 8 und des Differenzverstärkers 9 sowie des Mikrocontrollers 3, wobei insbesondere letzterer gegebenenfalls über weitere Regler abgenommen werden kann. Aus dem Diagramm der Fig. 3 ist für ein konkretes Ausführungsbeispiel ersichtlich, dass, während die Speicherkapazität des Kondensatorenergiespeichers mit steigender Ausgangs- oder Minimalspannung $U_{cmin}$ am Energiespeicher progressiv abfällt. Die aufnehmbare Anfangsleistung $P_{max}$ zum Zeitpunkt t0, d.h. den Beginn des Speichervorganges linear ansteigt.

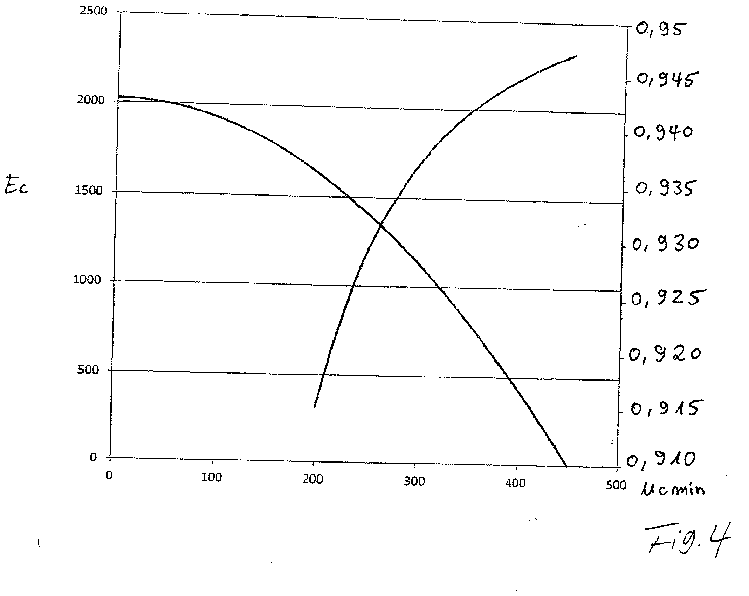

Die gleiche gegenläufige Tendenz gilt, wie sich quantitativ aus Fig. 4 ergibt, für Speicherkapazität und Wirkungsgrad, der letzterer sich mit höherer Startspannung $U_{cmin}$ ebenfalls erhöht, allerdings degressiv.

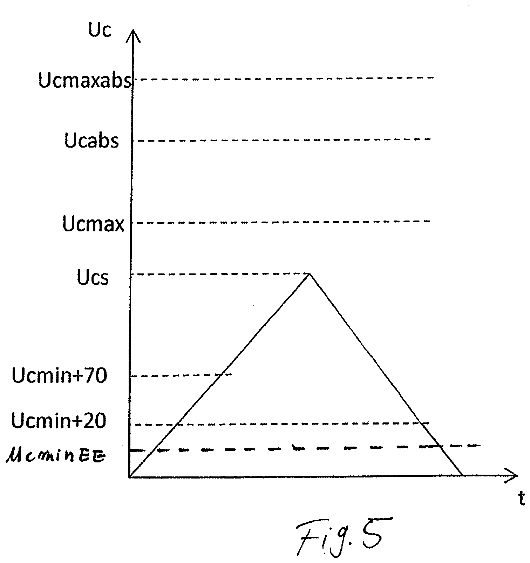

Der Fig. 5 sind zur Erläuterung die bei dem erfindungsgemäßen Verfahren maßgeblichen Spannungen am Energiespeicher bzw. am Kondensator bei einem schematisch dargestellten Spannungsverlauf über die Zeit dargestellt. Ein Speicherkondensator hat eine absolute Maximalspannung $U_{maxabs}$ (Absolut-Maximalspannung), die unter Strafe der Zerstörung des Kondensators auf keinen Fall erreicht werden darf. Unterhalb dieser absoluten Maximalspannung liegt eine für den Betrieb maßgebliche reguläre Maximalspannung $U_{cmax}$ des Energiespeichers bzw. Kondensators, die allerdings kurzzeitig überschritten werden darf und im Rahmen des erfindungsgemäßen Verfahrens mit einer zu erfassenden dynamisch veränderlichen absoluten Kondensatorspannung oder $U_{cabs}$ auch dynamisch Absolut-Spannung kurzzeitig überschritten werden kann. Die fest vorgegebene absolute untere Minimalspannung des Kondensators, die im Verfahren nicht unterschritten wird, d.h. unterhalb derer keine Energie vom Kondensator abgegeben wird, ist mit $U_{cmin}EE$ bezeichnet. $U_{cmin}$ bezeichnet die dynamisch veränderliche minimale Kondensatorspannung oder dynamisch veränderliche Minimalspannung, die durch das erfindungsgemäße Verfahren aufgrund des Arbeitsprozesses des Stromverbrauchers, also des Elektromotors, geregelt wird und zwar auf einem höheren Wert als $U_{cmin}EE$.

Das erfindungsgemäße Verfahren geht davon aus, dass zunächst eine absolute Minimalspannung $U_{cmin}EE$ größer als 0 gesetzt ist. Diese kann entweder bis zum Einsatz des erfindungsgemäßen Verfahrens auf einen bestimmten Wert festgelegt sein, wie dies beispielsweise in der EP 2 372 892 A1 unter [0039] beschrieben ist oder aber ausgehend hiervon dem jeweiligen Motor-Umrichter-System angepasst sein. Hierdurch wird sichergestellt, dass der dynamische Energiespeicher die Anfangsleistung aufnimmt, damit ein übermäßiges Ansteigen der Zwischenkreisspannung mit Abschalten des Wechselrichters vermieden wird.

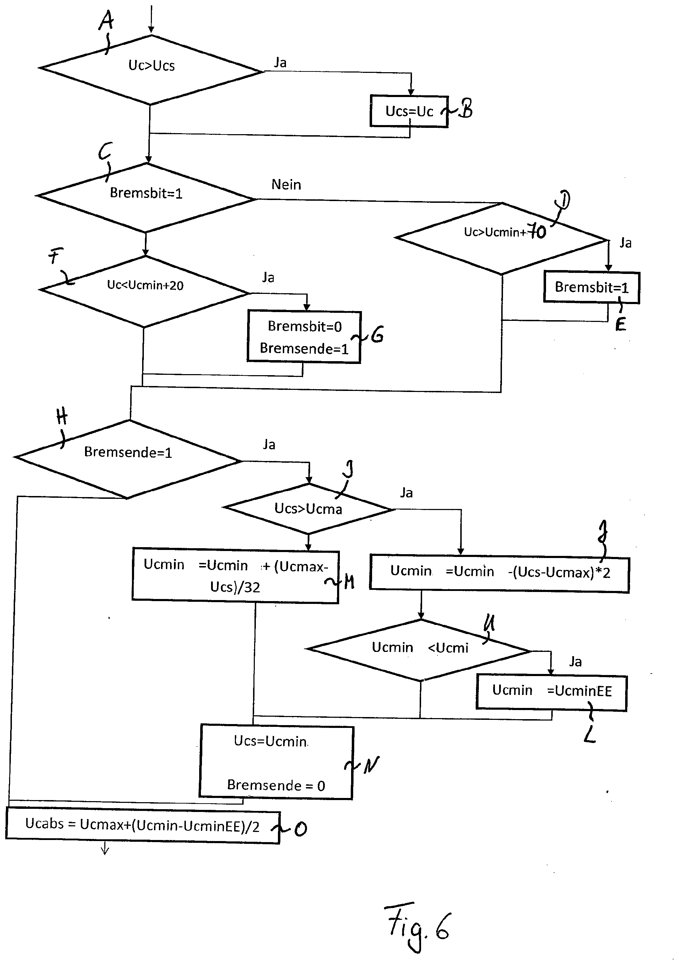

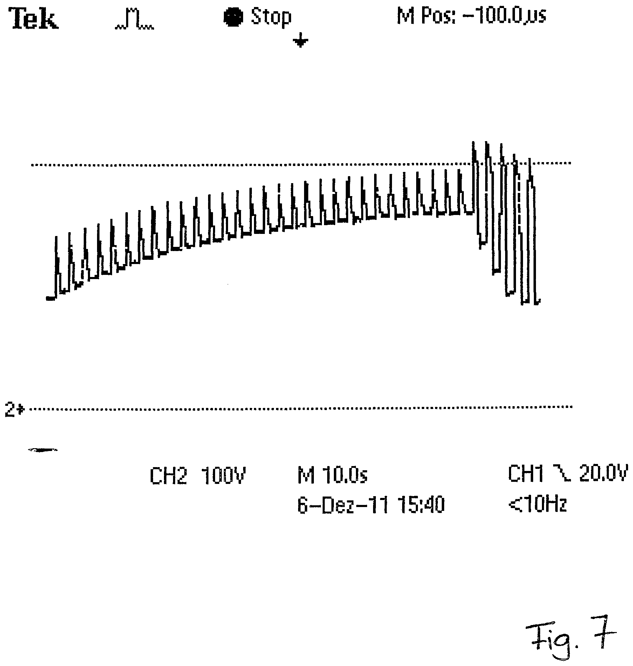

Hiervon ausgehend ist der Ablauf des erfindungsgemäßen Verfahrens während einer Bremsphase, deren eine durch eine Peak (Spitze) im Diagramm der Fig. 7 repräsentiert ist, im Ablaufdiagramm der Fig. 6 an einem konkreten Beispiel dargestellt.

Zunächst erfolgt im Schritt A die Überprüfung, ob die aktuelle Spannung $U_c$ am Kondensator eine gesetzte (Spitzen-)Spannung $U_{cs}$ überschreitet, in diesem Falle wird die gesetzte Spannung $U_{cs}$ auf die aktuelle Spannung $U_c$ gesetzt (Schritt B).

Im folgenden Schritt C wird überprüft, ob die Bremsphase schon erkannt und ein entsprechendes Bremsbit auf den Binärwert "1" gesetzt wurde. Ist dies nicht der Fall, so wird im Schritt D überprüft, ob die aktuelle Kondensatorspannung die dynamisch veränderliche, gesetzte Minimalspannung $U_{cmin}$, die in ihrer dynamischen Veränderlichkeit in der Fig. 7 durch die dortigen unteren Spannungswerte (oder deren Einhüllende) gegeben ist, um einen vorgegebenen Wert, hier 70 Volt, überschreitet; ist dies der Fall, so wird hierdurch der Bremsvorgang erkannt und das Bremsbit auf den Binärwert 1 gesetzt (Schritt E).

War das Bremsbit gesetzt, liegt die aktuelle Spannung aber nur noch um einen gegenüber dem im Schritt D herangezogenen geringeren Wert von beispielsweise 20 Volt über der gesetzten dynamisch veränderlichen Minimalspannung, wird mit dem Schritt F das Ende des Bremsvorgangs erkannt und der Binärwert des Bremsbits auf "0", der Binärwert einer Kennung für das Bremsende auf den Binärwert "1" gesetzt (Schritt G). Diese Überwachungen werden während einer Bremsphase wiederholt, insbesondere die Anpassung von $U_{cs}$ an den - während der Bremsphase erzielten - maximalen Wert der Kondensatorspannung $U_c$.

Im Folgenden (Schritt H) erfolgt nun die Auswertung der Messung und die dynamische Anpassung der veränderlichen Minimalspannung $U_{cmin}$, wenn das Bremsende, wie vorstehend erläutert, erreicht ist. Es wird zunächst im Schritt I überprüft, ob die vorher erreichte gesetzte Spitzenspannung $U_{cs}$ größer als die für den Regelbetrieb vorgegebene Maximalspannung $U_{cmax}$ ist, die kurzfristig überschritten werden kann (Fig. 5 und Erläuterung hierzu).

Ist dies nicht der Fall, so kann die dynamisch veränderliche Minimalspannung $U_{cmin}$ vorsichtig, d.h. in kleinen Schritten erhöht werden. Dies geschieht im konkreten Ausführungsbeispiel dadurch, dass im Schritt J die genannte Spannung $U_{cmin}$ auf einen Wert gesetzt wird, der um ein Zehntel (Faktor a = 0,1) der Differenz zwischen der regulären Maximalspannung und der im Verfahrensablauf der gegebenen Bremsphase aufgrund der Messungen gesetzten Spitzenspannung $U_{cs}$ größer ist als die in der vorherigen Bremsphase gesetzte dynamisch veränderliche Minimalspannung $U_{cmin}$, also

$$U_{cmin} = U_{cmin} + (U_{cmax} - U_{cs}) / 10$$

Bei dem nach der Bremsphase gegebenen motorischen Betrieb der Last erfolgt eine Entladung des dynamischen Energiespeichers dann nicht mehr auf die absolute minimale Kondensatorspannung $U_{cmin}EE$ oder die vorher gegebene minimale Kondensatorspannung, sondern die bei der letzten Bremsphase gesetzte Minimalspannung $U_{cmin}$, die in der Regel über den beiden vorgenannten Werten liegt.

Stellt sich allerdings bei der Überprüfung des Schrittes I heraus, dass die im vorherigen Verfahrensablauf der aktuellen Bremsphase gesetzte Spannung $U_{cs}$ die reguläre Maximalspannung $U_{cmax}$ des Kondensators schon überschreitet, darf die dynamisch veränderliche Minimalspannung $U_{cmin}$ nicht mehr erhöht, sondern muss vorsorglich abgesenkt werden, um zu vermeiden, dass die "zerstörerische" absolute Maximalspannung oder Absolut-Maximalspannung $U_{maxabs}$ (Fig. 5 und zugehörige Erläuterung) des Kondensators nicht erreicht wird. Hierzu wird in diesem Falle gemäß Schritt K die dynamisch veränderliche Minimalspannung $U_{cmin}$ reduziert und zwar in einem größeren Schritt als bei einer Erhöhung, wenn eine solche, wie vorstehend beschrieben, möglich ist und zwar im konkreten Ausführungsbeispiel derart, dass die bisherige Minimalspannung $U_{cmin}$ um das Zweifache (Faktor b = 2)der Differenz zwischen der während der Bremsphase gemessenen und damit gesetzten höchsten (Spitzen-)Spannung $U_{cs}$ und der regulären Maximalspannung vermindert wird, also

$$U_{cmin} = U_{cmin} - (U_{cs} - U_{cmax}) \times 2.$$

Damit wird erreicht, dass, wenn in der folgenden Bremsphase der Spannungsanstieg während der Bremsphase nicht höher ist als in der beschriebenen laufenden, die reguläre Maximalspannung am Kondensator nicht mehr überschritten wird. Im Folgenden wird dann überprüft, ob die aufgrund des Überschreitens der regulären Maximalspannung angestrebte selbst angepasste minimale Kondensatorspannung $U_{cmin}$ die absolute minimale Kondensatorspannung $U_{cmin}EE$, die auf keinen Fall unterschritten werden darf, unterschreiten würde. Ist dies der Fall, so wird der Zwischenwert $U_{cmin}$ der Minimalspannung wieder auf die absolute Minimalspannung des Kondensators oder Absolut-Minimalspannung $U_{cmin}EE$ heraufgesetzt (Schritt M). In beiden Fällen wird im Folgenden für die nächste Bremsphase der zur Überprüfung der aktuellen Kondensatorspannung vorgegebene gesetzte Spannungswert $U_{cs}$ auf $U_{cmin}$ gesetzt (wobei die dynamisch veränderliche Minimalspannung $U_{cmin}$ für die nächste Bremsphase schon - gegebenenfalls wie vorgesehen - gesetzt ist) Darüber hinaus wird die Statusanzeige für das Bremsende auf den Binärwert "0" gesetzt (Schritt N). Schließlich wird die dynamisch veränderliche Absolut-Spannung (oberhalb von $U_{cmax}$) auf einen Wert gesetzt, der um die Hälfte (Faktor c = 2) der Differenz zwischen $U_{cmin}$ und $U_{cmin}EE$ über der regulären Kondensatormaximalspannung $U_{cmax}$ liegt:

$$U_{cabs} = U_{cmax} + (U_{cmin} - U_{cmin}EE) / 2.$$

$U_{cabs}$ ist ein Spannungswert und bestimmt die absolut oberste im Rahmen des erfindungsgemäßen Verfahrens zugelassene Spannung des Energiespeichers und ist der Spannungswert, auf dem der Energiespeicher (Kondensator) höchstens aufgegeben wird. Wird dieser entsprechend Schritt O im Verfahrensablauf gesetzte Wert erreicht, wird die Verbindung des Energiespeichers zum Umrichter 1 bzw. Zwischenkreis 1.3.1 getrennt, so dass weitere Bremsenergie während der Bremsphase über den Bremswiderstand abgebaut, d.h. in Wärme umgewandelt wird(hierzu auch die genannte Druckschrift, insbesondere ab Absatz [0044].

Der Ablauf der Spannungen $U_c$ am Energiespeicher bzw. Kondensator während mehrerer aufeinanderfolgender Bremsphasen beim erfindungsgemäßen Verfahren ist im Oszillatorbild der Fig. 7 dargestellt und zwar zunächst für den Fall, dass die reguläre Maximalspannung $U_{cmax}$ am Kondensator nicht überschritten wird und damit die Anpassung der Minimalspannung $U_{cmin}$ entsprechend der Schritte A bis I, J, 0 erfolgt, im der linken Teil der Fig. 7, während bei d in der Fig. 7 erstmals die gepunktet dargestellte reguläre Maximalspannung $U_{cmax}$ überschritten wird und der Verfahrensablauf gemäß der vorstehenden Schilderung für die weiteren dort - rechts - dargestellten Bremsphasen bis zum Unterschreiten der $U_{cmax}$-Linie von dem Schritt I ausgehend über die Schritte K, L, M erfolgt. Es ist deutlich, dass der Anstieg der dynamisch veränderlichen Minimalspannung $U_{cmin}$, solange $U_{cmax}$ beim Laden des Energiespeicherkondensators nicht erreicht wird, relativ langsam erfolgt und langsamer als beim Überschreiten der genannten Maximalspannung $U_{cmax}$ aufgrund einer Bremsmusteränderung die Absenkung der dynamisch veränderlichen Minimalspannung $U_{cmin}$ am rechten Ende des Oszillatorbildes. Die Absenkung erfolgt schnell, so dass die Spitzenspannung $U_{cs}$ sich ebenfalls möglichst schnell wieder an $U_{cmax}$ annähert, was in der letzten dargestellten Bremsphase nahezu erreicht ist.

Durch das erfindungsgemäße Regelverfahren der dynamisch veränderlichen Minimalspannung $U_{cmin}$ des Energiespeichers (Kondensators) wird erreicht, dass bei Sicherstellung einer noch möglichst großen Speicherkapazität des Energiespeichers dennoch sowohl die aufnehmbare Anfangsleistung nach Eintritt des Bremsvorganges als auch der Wirkungsgrad der Speicherung maximiert und damit der gesamte Speichervorgang optimiert werden.

**Bezugszeichenliste**

1        Umrichter

1'       Spannungsteiler

1.1     Last

1.2     Elektromotor

1.3     Gleichrichter

1.3.1   Zwischen- oder Gleichstromkreis

1.4     Wechselrichter

1.4.1   Brems-Chopper-Ausgang

2       Energiespeichereinheit

2'      Spannungsteiler

1, 2, 4 Spannungsteiler

2.1     Schalter

2.2     DC-DC-Steller

2.3     Energiespeicher

3       Mikrocontroller

5       Hoch-Tief-Setzsteller

7       Pegelanpassung

8       Überstromerfassung

9       Differenzverstärker

12      Strom-Shunt

13      Kondensatoren

17      Bremswiderstand

18      Schaltnetzteil

**Patentansprüche**

**1.** Verfahren zum Optimieren des Betriebs eines Kondensators als Energiespeicher (2.3), insbesondere zum Optimieren des Zwischenspeicherns elektrischer Energie eines an einem Wechselrichter (1.4) betriebenen Elektromotors (1.2) in der Bremsphase in einem Energiespeicher (2.3), **dadurch gekennzeichnet,**

a. **dass** die während einer Bremsphase erreichte Spitzenspannung ($U_{cs}$) am Energiespeicher (2.3) bestimmt und festgehalten wird,
b. **dass** die Spitzenspannung ($U_{cs}$) mit der regulären zulässigen Maximalspannung des Energiespeichers (2.3) ($U_{cmax}$) verglichen wird, und
c. **dass** die Minimalspannung des Energiespeichers (2.3) ($U_{cmin}$), auf die dieser in seiner folgenden Entladephase entladen werden darf und ab der das Laden in einer folgenden Bremsphase des Elektromotors (1.2) erfolgt, erhöht wird, wenn die Spitzenspannung am Energiespeicher (2.3) ($U_{cs}$) gleich oder kleiner als die reguläre zulässige Maximalspannung des Energiespeichers (2.3) ($U_{cmax}$) ist.

**2.** Verfahren nach Anspruch 1, **dadurch gekennzeichnet, dass** die Minimalspannung des Energiespeichers (2.3) ($U_{cmin}$) vermindert wird, wenn die Spitzenspannung am Energiespeicher (2.3) ($U_{cs}$) während einer Bremsphase größer als die reguläre maximale Kondensatorspannung ($U_{cmax}$) ist.

**3.** Verfahren nach Anspruch 1 oder 2, **dadurch gekennzeichnet, dass** die Minimalspannung am Energiespeicher (2.3) ($U_{cmin}$) um einen Faktor a = 0,05 bis 0,2 der Differenz der regulären maximalen Kondensatorspannung und der während der Bremsphase gemessenen Spitzenspannung am Kondensator (2.3) erhöht wird:

$$U_{cmin} = U_{cmin} + (U_{cmax} - U_{cs}) \cdot a,$$

wobei

$$0,01 \leq a \leq 0,2$$

insbesondere um einen Faktor a = 1/32 der genannten Differenz erhöht wird:

$$U_{cmin} = U_{cmin} + (U_{cmax} - U_{cs}) / 32,$$

wenn die Spitzenspannung am Energiespeicher (2.3) ($U_{cs}$) gleich oder kleiner als die reguläre zulässige Maximalspannung des Energiespeichers (2.3) ($U_{cmax}$) ist.

**4.** Verfahren nach Anspruch 2 oder nach Anspruch 3 in Verbindung mit Anspruch 2, **dadurch gekennzeichnet, dass** die Minimalspannung des Energiespeichers (2.3) ($U_{cmin}$) um einen Faktor b = 1 bis 3 der Differenz zwischen während der Bremsphase gemessener Spitzenspannung am Energiespeicher (2.3) ($U_{cs}$) und regulärer maximaler Spannung des Energiespeichers (2.3) ($U_{cmax}$) vermindert wird:

$$U_{cmin} = U_{cmin} - (U_{cs} - U_{cmax}) \cdot b,$$

wobei

$$1 \leq b \leq 3,$$

insbesondere um einen Faktor b = 2 der genannten Differenz vermindert wird:

$$U_{cmin} = U_{cmin} - (U_{cs} - U_{cmax}) \cdot 2,$$

wenn die Spitzenspannung am Energiespeicher (2.3) ($U_{cs}$) während einer Bremsphase größer als die reguläre Maximalspannung ($U_{cmax}$) des Energiespeichers (2.3) ist.

**5.** Verfahren nach einem der Ansprüche 2 bis 4, **dadurch gekennzeichnet, dass** das Verhältnis der Veränderungsfaktoren a zu b bei Erhöhung bzw. Verminderung der dynamisch veränderlichen Minimalspannung ($U_{cmin}$) am Energiespeicher (2.3) zwischen 1:10 und 1:100, vorzugsweise bei 1:64 liegt.

**6.** Verfahren nach einem der vorangehenden Ansprüche, **dadurch gekennzeichnet, dass** während einer Bremsphase ein gesetzter und gespeicherter Spitzenspannungswert ($U_{cs}$) auf den höchsten während der Bremsphase gemessenen Wert der Spannung ($U_c$) am Energiespeicher (2.3) gesetzt wird.

**7.** Verfahren nach einem der vorangehenden Ansprüche, **dadurch gekennzeichnet, dass** Eintritt und/oder Ende einer Bremsphase des Motors (1.2) am Wechselrichter (1.4) bestimmt und festgehalten werden, insbesondere der Eintritt der Bremsphase bzw. das Ende der Bremsphase jeweils durch Setzen eines Merkers.

8. Verfahren nach Anspruch 7, **dadurch gekennzeichnet, dass** der Eintritt der Bremsphase bei Überschreiten der geltenden dynamisch veränderlichen Minimalspannung am Energiespeicher (2.3) ($U_{cmin}$) um einen Wert $U_a$ zwischen 30 und 90 Volt, vorzugsweise 40 bis 50 Volt, und/oder das Ende der Bremsphase bei Unterschreiten der gesetzten dynamisch veränderlichen minimalen Spannung am Energiespeicher (2.3) ($U_{cmin}$) zuzüglich eines Werts $U_b$ von höchstens 10 bis 30 Volt, vorzugsweise 20 Volt durch die aktuell anliegende Spannung $U_c$ detektiert wird.

9. Verfahren nach Anspruch 7 oder 8, **dadurch gekennzeichnet, dass** der Grenzwert $U_a$ des Überschreitens der gesetzten dynamisch veränderlichen Minimalspannung ($U_{cmin}$) des Energiespeichers (2.3) zum Bestimmen des Eintritts der Bremsphase größer, insbesondere wesentlich größer, als der Grenzwert $U_b$ über der gesetzten dynamisch veränderlichen Minimalspannung am Energiespeicher (2.3) ($U_{cmin}$) gemäß $U_a \gg U_b$, insbesondere $U_a > U_b$ + 10 Volt ist.

10. Verfahren nach einem der vorangehenden Ansprüche, **dadurch gekennzeichnet, dass** das Unterschreiten einer vorgegebenen absoluten Minimalspannung oder Absolut-Minimalspannung des Energiespeichers (2.3) ($U_{cmin}EE$) durch die während der Bremsphase gesetzte dynamisch veränderliche Minimalspannung des Energiespeichers (2.3) ($U_{cmin}$) überwacht wird, woraufhin die dynamisch veränderliche Minimalspannung des Energiespeichers (2.3) ($U_{cmin}$) auf den absoluten Minimalwert ($U_{cmin}EE$) gesetzt wird.

11. Verfahren nach einem der vorangehenden Ansprüche, **dadurch gekennzeichnet, dass** am Ende einer Bremsphase der gesetzte Spannungsspitzenwert ($U_{cs}$) für die nächste Bremsphase auf den Wert der dynamisch veränderlichen Minimalspannung ($U_{cmin}$) des Energiespeichers (2.3) ($U_{c-min}$) gesetzt wird.

12. Verfahren nach einem der vorangehenden Ansprüche, **dadurch gekennzeichnet, dass** zum Ende einer Bremsphase der Wert einer dynamisch veränderlichen Maximalspannung ($U_{cabs}$) auf einen oberhalb der regulären Maximalspannung ($U_{cmax}$) liegenden Wert gesetzt wird, insbesondere auf einen um einen Erhöhungswert $U_e$ oberhalb von $U_{cmax}$ liegenden Wert.

13. Verfahren nach Anspruch 12, **dadurch gekennzeichnet, dass** der Erhöhungswert ein Bruchteil der Differenz zwischen der gesetzten Minimalspannung des Energiespeichers (2.3) ($U_{cmin}$) und dessen Absolut-Minimalspannung ($U_{cmin}EE$) ist vorzugsweise ein Bruchteil c zwischen 1 und 3 dieser Differenz:

$$U_{cabs} = U_{cmax} + U_e = U_{cmax} + (U_{cmin} - U_{cmin}EE) / c,$$

wobei

$$1 \leq c \leq 3,$$

insbesondere c die Hälfte dieser Differenz ist:

$$U_{cabs} = U_{cmax} + U_e = U_{cmax} + (U_{cmin} - U_{cmin}EE) / 2$$

**Claims**

1. Method for optimizing the operation of a capacitor as an energy store (2.3), in particular for optimizing the buffer storage of electrical energy of an electric motor (1.2) operated at an inverter (1.4) in the braking phase in an energy store (2.3), **characterized in that**

   a. the peak voltage ($U_{cs}$) at the energy store (2.3) reached during a braking phase is determined and held,
   b. the peak voltage ($U_{cs}$) is compared with the regular permissible maximum voltage of the energy store (2.3) ($U_{cmax}$), and
   c. the minimum voltage of the energy store (2.3) ($U_{cmin}$), to which said energy store may be discharged in its following discharge phase and from which charging takes place in a following braking phase of the electric motor (1.2), is increased when the peak voltage at the energy store (2.3) ($U_{cs}$) is equal to or less than the regular permissible maximum voltage of the energy store (2.3) ($U_{cmax}$).

2. Method according to Claim 1, **characterized in that** the minimum voltage of the energy store (2.3) ($U_{cmin}$) is decreased when the peak voltage at the energy store (2.3) ($U_{cs}$) during a braking phase is greater than the regular maximum capacitor voltage ($U_{cmax}$).

3. Method according to Claim 1 or 2, **characterized in that** the minimum voltage at the energy store (2.3) ($U_{cmin}$) is increased by a factor a = 0.05 to 0.2 of the difference of the regular maximum capacitor voltage and of the peak voltage at the capacitor (2.3) measured during the braking phase:

$$U_{cmin} = U_{cmin} + (U_{cmax} - U_{cs}) \cdot a,$$

wherein

$$0.01 \leq a \leq 0.2,$$

in particular is increased by a factor a = 1/32 of the mentioned difference:

$$U_{cmin} = U_{cmin} + (U_{cmax} - U_{cs}) / 32,$$

when the peak voltage at the energy store (2.3) ($U_{cs}$) is equal to or less than the regular permissible maximum voltage of the energy store (2.3) ($U_{cmax}$).

4. Method according to Claim 2 or according to Claim 3 in connection with Claim 2, **characterized in that** the minimum voltage of the energy store (2.3) ($U_{cmin}$) is decreased by a factor b = 1 to 3 of the difference between the peak voltage at the energy store (2.3) ($U_{cs}$) measured during the braking phase and of the regular maximum voltage of the energy store (2.3) ($U_{cmax}$):

$$U_{cmin} = U_{cmin} - (U_{cs} - U_{cmax}) \cdot b,$$

wherein

$$1 \leq b \leq 3,$$

in particular is decreased by a factor b = 2 of the mentioned difference:

$$U_{cmin} = U_{cmin} - (U_{cs} - U_{cmax}) \cdot 2,$$

when the peak voltage at the energy store (2.3) ($U_{cs}$) during a braking phase is greater than the regular maximum voltage ($U_{cmax}$) of the energy store (2.3).

5. Method according to one of Claims 2 to 4, **characterized in that** the ratio of the modification factors a to b when increasing and/or decreasing the dynamically changing minimum voltage ($U_{cmin}$) at the energy store (2.3) is between 1:10 and 1:100, preferably 1:64.

6. Method according to one of the preceding claims, **characterized in that**, during a braking phase, a set and stored peak voltage value ($U_{cs}$) is set to the highest value of the voltage ($U_c$) at the energy store (2.3) measured during the braking phase.

7. Method according to one of the preceding claims, **characterized in that** the onset and/or end of a braking phase of the motor (1.2) at the inverter (1.4) is determined and held, in particular the onset of the braking phase and/or the end of the braking phase are in each case determined and held by setting a marker.

8. Method according to Claim 7, **characterized in that** the onset of the braking phase is detected when the prevailing dynamically changing minimum voltage at the energy store (2.3) ($U_{cmin}$) is exceeded by the presently applied voltage $U_c$ by a value $U_a$ between 30 and 90 volts, preferably 40 to 50 volts, and/or the end of the braking phase is detected when the set dynamically changing minimum voltage at the energy store (2.3) ($U_{cmin}$) plus a value $U_b$ of at most 10 to 30 volts, preferably 20 volts, is undershot by the presently applied voltage $U_c$.

9. Method according to Claim 7 or 8, **characterized in that** the limit value $U_a$ of exceeding the set dynamically changing minimum voltage ($U_{cmin}$) of the energy store (2.3) for determining the onset of the braking phase is greater, in particular substantially greater, than the limit value $U_b$ over the set dynamically changing minimum voltage at the energy store (2.3) ($U_{cmin}$) according to $U_a \gg U_b$, in particular $U_a > U_b + 10$ volts.

10. Method according to one of the preceding claims, **characterized in that** the undershooting of a prescribed absolute minimum voltage or absolute minimum voltage of the energy store (2.3) ($U_{cmin}EE$) is monitored by the dynamically changing minimum voltage of the energy store (2.3) ($U_{cmin}$) set during the braking phase, whereupon the dynamically changing minimum voltage of the energy store (2.3) ($U_{cmin}$) is set to the absolute minimum value ($U_{cmin}EE$).

11. Method according to one of the preceding claims, **characterized in that**, at the end of a braking phase, the set peak voltage value ($U_{cs}$) is set to the value of the dynamically changing minimum voltage ($U_{cmin}$) of the energy store (2.3) ($U_{cmin}$) for the next braking phase.

12. Method according to one of the preceding claims, **characterized in that**, at the end of a braking phase, the value of a dynamically changing maximum voltage ($U_{cabs}$) is set to a value above the regular maximum voltage ($U_{cmax}$), in particular to a value above $U_{cmax}$ by an increase value $U_e$.

13. Method according to Claim 12, **characterized in that** the increase value is a fraction of the difference between the set minimum voltage of the energy store (2.3) ($U_{cmin}$) and the absolute minimum voltage ($U_{cmin}EE$) thereof, preferably a fraction c between 1 and 3 of said difference:

$$U_{cabs} = U_{cmax} + U_e = U_{cmax} + (U_{cmin} - U_{cmin}EE) / c$$

wherein

$$1 \le c \le 3,$$

in particular c is half of said difference:

$$U_{cabs} = U_{cmax} + U_e = U_{cmax} + (U_{cmin} - U_{cmin}EE) / 2.$$

**Revendications**

1. Procédé d'optimisation du fonctionnement d'un condensateur servant d'accumulateur d'énergie (2.3), notamment d'optimisation de l'accumulateur intermédiaire d'énergie électrique d'un moteur électrique (1.2) entraîné au niveau d'un onduleur (1.4) dans la phase de freinage dans un accumulateur d'énergie (2.3), **caractérisé en ce que** :

a. la tension de crête ($U_{cs}$) atteinte pendant une phase de freinage est définie et relevée au niveau de l'accumulateur d'énergie (2.3) ;
b. la tension de crête ($U_{cs}$) est comparée à la tension maximale réglementaire autorisée de l'accumulateur d'énergie (2.3) ($U_{cmax}$) ; et
c. la tension minimale de l'accumulateur d'énergie (2.3) ($U_{cmin}$) à laquelle celui-ci peut être déchargé dans sa phase de décharge suivante et à partir de laquelle la charge dans une phase de freinage suivante du moteur électrique (1.2) se produit est augmentée lorsque la tension de crête au niveau de l'accumulateur d'énergie (2.3) ($U_{cs}$) est inférieure ou égale à la tension maximale réglementaire autorisée de l'accumulateur d'énergie (2.3) ($U_{cmax}$).

2. Procédé selon la revendication 1, **caractérisé en ce que** la tension minimale de l'accumulateur d'énergie (2.3) ($U_{cmin}$) est réduite lorsque la tension de crête au niveau de l'accumulateur d'énergie (2.3) ($U_{cs}$) est supérieure, pendant une phase de freinage, à la tension de condensateur ($U_{cmax}$) maximale réglementaire.

3. Procédé selon la revendication 1 ou 2, **caractérisé en ce que** la tension minimale au niveau de l'accumulateur d'énergie (2.3) ($U_{cmin}$) est augmentée d'un facteur a = 0,05 à 0,2 de la différence de la tension de condensateur maximale réglementaire et de la tension de crête mesuré pendant la phase de freinage au niveau du condensateur (2.3) :

$$U_{cmin} = U_{cmin} + (U_{cmax} - U_{cs}) \cdot a,$$

où

$$0,01 \leq a \leq 0,2$$

notamment augmentée d'un facteur a = 1/32 de ladite différence :

$$U_{cmin} = U_{cmin} + (U_{cmax} - U_{cs}) / 32$$

lorsque la tension de crête au niveau de l'accumulateur d'énergie (2.3) ($U_{cs}$) est inférieure ou égale à la tension maximale réglementaire autorisée de l'accumulateur d'énergie (2.3) ($U_{cmax}$).

4. Procédé selon la revendication 2 ou la revendication 3 associée à la revendication 2, **caractérisé en ce que** la tension minimale de l'accumulateur d'énergie (2.3) ($U_{c-min}$) est réduite d'un facteur b = 1 à 3 de la différence entre la tension de crête mesurée pendant la phase de freinage au niveau de l'accumulateur d'énergie (2.3) ($U_{cs}$) et la tension maximale réglementaire de l'accumulateur d'énergie (2.3) ($U_{cmax}$) :

$$U_{cmin} = U_{cmin} - (U_{cs} - U_{cmax}) \cdot b,$$

où

$$1 \leq b \leq 3,$$

notamment réduite d'un facteur b = 2 de ladite différence :

$$U_{cmin} = U_{cmin} - (U_{cs} - U_{cmax}) \cdot 2$$

lorsque la tension de crête au niveau de l'accumulateur d'énergie (2.3) ($U_{cs}$) est supérieure, pendant une phase de freinage, à la tension maximale ($U_{cmax}$) réglementaire de l'accumulateur d'énergie (2.3).

5. Procédé selon l'une quelconque des revendications 2 à 4, **caractérisé en ce que** le rapport des facteurs de variation a sur b en cas d'augmentation et/ou de réduction de la tension minimale ($U_{cmin}$) variable dynamiquement au niveau de l'accumulateur d'énergie (2.3) est comprise entre 1:10 et 1:100 et est de préférence de 1:64.

6. Procédé selon l'une quelconque des revendications précédentes, **caractérisé en ce que** pendant une phase de freinage, une valeur de tension de crête ($U_{cs}$) prise et accumulée est prise sur la plus grande valeur, mesurée pendant la phase de freinage, de la tension ($U_c$), au niveau de l'accumulateur d'énergie (2.3).

**7.** Procédé selon l'une quelconque des revendications précédentes, **caractérisé en ce que** le début et/ou la fin d'une phase de freinage du moteur (1.2) sont déterminés et relevés au niveau de l'onduleur (1.4), notamment le début de la phase de freinage et/ou la fin de la phase de freinage, respectivement par mise en place d'un drapeau de signalisation.

**8.** Procédé selon la revendication 7, **caractérisé en ce que** le début de la phase de freinage est détecté par la tension actuelle $U_c$ en cas de dépassement de la tension minimale variable dynamiquement en cours au niveau de l'accumulateur d'énergie (2.3) ($U_{cmin}$) d'une valeur $U_a$ comprise entre 30 et 90 Volt, de préférence de 40 à 50 Volt et/ou que la fin de la phase de freinage est détectée lors du passage en dessous de la tension minimale variable dynamiquement prélevée au niveau de l'accumulateur d'énergie (2.3) ($U_{cmin}$) par rapport à une valeur $U_b$ de tout au plus 10 à 30 Volt, de préférence de 20 Volt.

**9.** Procédé selon la revendication 7 ou 8, **caractérisé en ce que** la valeur limite $U_a$ du dépassement de la tension minimale ($U_{cmin}$) variable dynamiquement prélevée de l'accumulateur d'énergie (2.3) pour déterminer le début de la phase de freinage est supérieure, notamment largement supérieure, à la valeur limite $U_b$ au-dessus de la tension minimale variable dynamiquement prélevée au niveau de l'accumulateur d'énergie (2.3) ($U_{cmin}$) selon $U_a \gg U_b$, notamment $U_a > U_b + 10$ Volt.

**10.** Procédé selon l'une quelconque des revendications précédentes, **caractérisé en ce que** le passage en dessous d'une tension minimale absolue prédéterminée ou d'une tension minimale absolue de l'accumulateur d'énergie (2.3) ($U_{cmin}EE$) est surveillée par la tension minimale variable dynamiquement prélevée pendant la phase de freinage de l'accumulateur d'énergie (2.3) ($U_{cmin}$), après quoi la tension minimale variable dynamiquement de l'accumulateur d'énergie (2.3) ($U_{cmin}$) est prélevée sur la valeur minimale absolue ($U_{cmin}EE$).

**11.** Procédé selon l'une quelconque des revendications précédentes, **caractérisé en ce qu'**à la fin d'une phase de freinage, la valeur de tension de crête ($U_{cs}$) définie pour la phase de freinage suivante est placée à la valeur de la tension minimale ($U_{cmin}$) variable dynamiquement de l'accumulateur d'énergie (2.3) ($U_{cmin}$).

**12.** Procédé selon l'une quelconque des revendications précédentes, **caractérisé en ce qu'**à la fin d'une phase de freinage, la valeur d'une tension maximale variable dynamiquement ($U_{cabs}$) est placée à une valeur placée au-dessus de la tension maximale réglementaire ($U_{cmax}$), notamment à une valeur placée autour d'une valeur d'augmentation $U_e$ au-dessus de $U_{cmax}$.

**13.** Procédé selon la revendication 12, **caractérisé en ce que** la valeur d'augmentation est une fraction de la différence entre la tension minimale définie de l'accumulateur d'énergie (2.3) ($U_{cmin}$) et sa tension minimale absolue ($U_{cmin}EE$), de préférence une fraction c comprise entre 1 et 3 de cette différence :

$$U_{cabs} = U_{cmax} + U_e = U_{cmax} + (U_{cmin} - U_{cmin}EE) \ / \ c,$$

où

$$1 \leq c \leq 3,$$

notamment c étant la moitié de cette différence :

$$U_{cabs} = U_{cmax} + U_e = U_{cmax} + (U_{cmin} - U_{cmin}EE) \ / \ 2$$

Fig. 1

# Blockschaltbild

Fig. 2

EP 2 618 478 B1

Fig. 3

Fig. 4

Fig. 5

A

Uc>Ucs — Ja → Ucs=Uc — B

C

Bremsbit=1 — Nein → Uc>Ucmin+70 — Ja → Bremsbit=1 — E

F

Uc<Ucmin+20 — Ja → Bremsbit=0
Bremsende=1 — G

H

Bremsende=1 — Ja → Ucs>Ucma — Ja → Ucmin =Ucmin -(Ucs-Ucmax)*2

Ucmin =Ucmin + (Ucmax-Ucs)/32 — M

Ucmin <Ucmi — Ja → Ucmin =UcminEE — L

Ucs=Ucmin.

Bremsende = 0 — N

Ucabs = Ucmax+(Ucmin-UcminEE)/2 — O

Fig. 6

Tek    .∏.    ● Stop      M Pos: −100.0μs

2✦ ············································································································

CH2   100V     M 10.0s      CH1 ⟍ 20.0V

6−Dez−11 15:40     <10Hz

Fig. 7

**IN DER BESCHREIBUNG AUFGEFÜHRTE DOKUMENTE**

**In der Beschreibung aufgeführte Patentdokumente**

- EP 2372892 A1
- US 20100019718 A1